# EUROPÄISCHE PATENTANMELDUNG

(11) **EP 0 992 211 A2**
(43) Veröffentlichungstag der Anmeldung: **12.04.2000**
(21) Anmeldenummer: 99118919.2
(22) Anmeldetag: 25.09.1999
(51) Int. Cl.: A47L 9/04, A47L 13/40

(54) **Staubsauger**

(30) Priorität: 07.10.1998 DE 19846103
(71) Anmelder: Vorwerk & Co. Interholding GmbH, 42275 Wuppertal (DE)
(72) Erfinder: Hilgers, Stefan, 45145 Essen (DE); Rodemann, Thomas, 44879 Bochum (DE); Jacobs, Carsten, 45477 Radevormwald (DE); Iglseder, Heinrich, 42897 Remscheid (DE); Meyer, Frank, 58675 Hemer (DE); Zeeb, Gerhard, 42289 Wuppertal (DE)
(74) Vertreter: Müller, Enno, Dipl.-Ing.

(57) **Zusammenfassung**

Die Erfindung betrifft einen Staubsauger zur Reinigung von Böden oder Teppichen mit einem Saugmund (6) einem den Saugmund (6) umgebenden Bodenblech (5) und einer Saugleitung, wobei zur Unterstützung der Staubaufnahme eine elektrostatische Aufladung von Teilen des Staubsaugers vorgesehen ist. Um einen Staubsauger der in Rede stehenden Art hinsichtlich der Unterstützung der Staubaufnahme durch elektrostatische Aufladung in vorteilhafter Weise weiterzubilden, wird vorgeschlagen, daß das Bodenblech (5) elektrostatisch aufgeladen ist und daß die elektrostatische Aufladung mittels eines in dem Staubsauger angeordneten, gesonderten Generators (8) vorgenommen ist.

## Beschreibung

Die Erfindung betrifft einen Staubsauger zur Reinigung von Böden oder Teppichen mit einem Saugmund, einem den Saugmund umgebenden Bodenblech und einer Saugleitung, wobei zur Unterstützung der Staubaufnahme eine elektrostatische Aufladung von Teilen des Staubsaugers vorgesehen ist.

Um die Reinigungsleistung eines Staubsaugers wirkungsvoll zu unterstützen ist es bekannt elektrostatische Kräfte zu nutzen. Bei der Trennung von nichtleitenden/schwerleitenden Gegenständen kommt es zu einer elektrostatischen Aufladung beider Gegenstände. Die Höhe und auch die Polarität wird bedingt durch die einzelnen Materialpaarungen. Werkstoffe wie Polyamid, Wolle oder Seide gelten als Donatoren und geben leicht Elektronen ab. Es entsteht durch Trennen an diesen Stoffen eine positive Ladung. Die von diesen Fasern oder Materialien gelösten Stoffe sind aufgrund der Elektronenaufnahme negativ geladen. Auf die entgegengesetzt geladenen Teilchen wirkt untereinander eine Anziehungskraft in Richtung Boden/Teppich, wobei sich bei Teppichen aus alternativen Materialien wie z.B. Polypropylen die Ladung umkehrt. Die beschriebenen Effekte sind jedoch weiterhin vorhanden. Führt man nunmehr ein Element bspw. eine Düse eines Staubsaugers, welche stärker geladen ist, nahe an das System Teppich/Staub, so kann die Anziehungskraft dieses Elementes auf das geladene, schwebende Teilchen größer sein, welch letzteres hierdurch entfernt wird. Eine grundsätzliche Betrachtung der Bindungskräfte zwischen einem Partikel und einer Oberfläche zeigt, daß im wesentlichen drei verschiedene Arten von Kräften wirksam sind, die sogenannten van-der-Waals-Kräfte, die elektrostatischen Kräfte (Kontaktpotential bzw. Spiegelkraft) und die Kapillarkräfte. Hinsichtlich der Ladung von Partikeln und deren Transport in einem elektrischen Feld kann zwischen den grundlegenden Mechanismen der Reibung, der Induktion, der Korona-Entladung und der Dielektrophorese unterschieden werden.

Stand der Technik ist es beispielsweise die elektrostatischen Bindungskräfte für die Abscheidung der in einem Luftvolumenstrom befindlichen Partikel auszunutzen. Dazu werden die in herkömmlicher Weise durch Absaugen aufgenommene Partikel in unterschiedlicher Weise geladen und durch entsprechend angepaßte Anordnungen von Filtersystem abgeschieden. Weiter ist beispielsweise aus der DE-A1 196 44 589 ein Staubsauger bekannt, welcher im Bereich des Saugmundes ein Staubanziehungsgitter aufweist. Letzteres ist an eine Hochspannungsquelle angeschlossen und wie eine Niederschlagselektrode geschaltet. Dieses Staubanziehungsgitter ist von dem mit Staubteilchen beladenen Saugluftstrom durchströmbar.

Im Hinblick auf den zuvorbeschriebenen Stand der Technik wird eine technische Problematik der Erfindung darin gesehen, einen Staubsauger der in Rede stehenden Art hinsichtlich der Unterstützung der Staubaufnahme durch elektrostatische Aufladung in vorteilhafter Weise weiterzubilden.

Diese Problematik ist zunächst und im wesentlichen beim Gegenstand des Anspruchs 1 gelöst, wobei darauf abgestellt ist, daß das Bodenblech elektrostatisch aufgeladen ist und daß die elektrostatische Aufladung mittels eines in dem Staubsauger angeordneten, gesonderten Generators vorgenommen ist, wobei weiter die elektrostatische Aufladung des Bodenbleches sowohl positiv als auch negativ sein kann. Hier kommt bevorzugt ein Bodenblech aus metallenem Material zum Einsatz, welches gegenüber den dieses Bodenblech umgebenden Baugruppen isoliert angeordnet ist. So wird eine gewünschte Hochspannung durch einen externen Generator erzeugt und direkt an das Bodenblech angelegt. Die Größenordnung der zu erzeugenden Ladungen hängt hierbei in erster Linie von der Art des Staubes und des Bodenbelages/Teppiches ab, wobei gegen Erdpotential gemessen Spannungen zwischen 1 bis 20 kV genutzt werden. So führt bereits das einfache Anlegen einer externen Spannung von bevorzugt +5kv an das Bodenblech auf verschiedenen Teppichböden zu einer erhöhten Staubaufnahme. Diese Erhöhung der Staubaufnahme ist durch eine Ladungstrennung zwischen Partikel und Teppichfaser beim Losreißen des Partikels von der Faser zu erklären. Hierbei erhält das Partikel eine negative Ladung und wird somit vom positiven Bodenblech angezogen. Untersuchungen haben gezeigt, daß dieser Effekt auch ohne mechanische Einwirkungen, bzw. durch rotierende Bürsten oder dergleichen, nachgewiesen werden kann. Alternativ kann vorgesehen sein, daß das Bodenblech aus einen Kunststoff besteht, der durch Reibkontakt zu einem Bodenbelag, beispielsweise Teppich, elektrostatisch aufgeladen ist. Das im Zuge der Reinigung des Bodenbelages durchgeführte Gleiten des Staubsaugers bzw. der Staubsaugerdüse oder dergleichen auf dem Bodenbelag führt durch die Reibungsbewegung zur Intensivierung der Berührung, was durch die hierdurch gegebene Triboelektrizität die entgegengesetzte elektrische Aufladung der aneinander geriebenen Körper, hier Bodenblech und Bodenbelag, bewirkt. Auch durch diese elektrostatische Aufladung werden die Staubpartikel in den Teppichboden oder dergleichen von den Fasern losgerissen.

Des weiteren betrifft die Erfindung einen Staubsauger nach den Merkmalen des Oberbegriffs des Anspruches 1, wobei der Staubsauger weiter eine zur Einwirkung auf den Bodeabelag angeordnete, mit Borsten versehene Bürste aufweist. Hier wird zur Erzielung einer verbesserten Staubaufnahme vorgeschlagen, daß die Borsten hinsichtlich des Materials im Hinblick auf einen großen Abstand in der triboelektrischen Reihe ausgewählt sind. So ist es bei Staubsaugern mit elektrisch angetriebenen Reinigungsbürsten durch die gezielte Auswahl der Beborstungsmaterialien möglich, den Reibkontakt zwischen Bürste bzw. Borsten und Teppichfaser als Ladungsquelle zu nutzen. Maßgebend hierbei ist, daß die jeweiligen Materialpaarungen bezüglich der triboelektrischen Reihe einen möglichst großen Abstand aufweisen, so daß durch die, durch die rotierenden Bürsten bewirkte Reibungsbewegung eine elektrostatische Aufladung erzielt wird. So ist beispielsweise vorgesehen, daß die Borsten aus Polypropylen für Wollteppiche oder Polyamidteppiche bestehen. Darüber hinaus ist es auch denkbar, Naturborsten zur Bestückung der Bürste zu nutzen, wobei bei reinen Naturhaarmischungen gleichfalls triboelektrische Effekte zum Tragen kommen. In einer Weiterbildung des Erfindungsgegenstandes ist vorgesehen, daß das Bodenblech und das Material der Saugleitung im Hinblick auf die triboelektrische Reihe ausgewählt sind.

Es wurde festgestellt, daß zur positiven Beeinflussung der Staubaufnahme an Bodenblech ein Potential gemessen gegen Erde von weniger als 20kv liegen sollte. Dieser Spannungswert liegt in einer Größenordnung, welcher beispielsweise durch einen gesonderten Generator in dem Staubsaugergehäuse aufgebracht werden kann. Des weiteren trägt bei einem Staubsauger mit auf dem Bodenbelag einwirkender Bürste diese zu einen erheblichen Teil zur Ladungsübertragung bei. Durch den Volumenstrom und die mechanische Arbeit der Bürsten werden die üblicherweise neutralen SiO₂ Partikel aus dem Haftverbund Faser/Staubkorn gerissen. Es entsteht somit eine positive Ladung einer Faser und eine negative Ladung an dem Staubkorn. Das Bodenblech ist aufgrund des großflächigen Kontaktes zum Teppich ebenfalls positiv geladen. Unter der Annahme, daß das Blech positiver geladen ist als die einzelnen Teppichfasern, hat das SiO₂-Teilchen das Bestreben, zum Blech zu wandern und wird somit vom Teppich entfernt.

Darüber hinaus betrifft die Erfindung einen Staubsauger nach den Merkmalen des Oberbegriffs des Anspruches 3, wobei hier zur positiven Beeinflussung der Staubaufnahme vorgeschlagen wird, daß die Bürste wechselweise mit einem elektrischen Potential zur Aufprägung einer elektrischen Aufladung und Entladung beaufschlagt werden oder geerdet werden kann. Diese erfindungsgemäße Ausgestaltung kann alternativ oder auch kombinativ zu den zuvorbeschriebenen Maßnahmen zur Erhöhung der Staubaufnahme zur Anwendung kommen. Hierbei werden weitere Ladungs- und Transportvorgänge genutzt, so beispielsweise die Ladung durch Induktion, welche kontrolliert und reproduzierbar eingesetzt werden kann. Durch den zusätzlichen Einsatz elektrostatischer Effekte wird eine signifikante Erhöhung der Staubaufnahme für verschiedene Teppiche erzielt, wobei der Teppichboden keiner erhöhten mechanischen Beanspruchung ausgesetzt wird und es hiermit zu keiner Erhöhung der Schiebekraft kommt. So ist durch die kontrollierte und reproduzierbare, wechselweise Beaufschlagung der Bürste eine erhöhte Staubaufnahme feststellbar. Die elektrostatische Aufladung erfolgt hierbei bevorzugt unmittelbar in dem zu reinigenden Bodenbereich, ist somit gezielt anwendbar.

Bevorzugt wird hierbei eine Ausgestaltung, bei welcher das Bodenblech und die Borsten aus einem elektrisch leitenden Material bestehen. Weiter wird bevorzugt, daß die Borsten in Borstenreihen angeordnet sind und daß die Borstenreihen unabhängig voneinander mit einem elektrischen Potential beaufschlagt werden können oder geerdet werden können. So sind die Borstenreihen beispielsweise in Abschnitte von 2 bis 5 Borstenbüscheln zusammengefaßt, welche unabhängig voneinander ge- oder entladen werden können. Die Ladung erfolgt hierbei bevorzugt über eine Spannungsquelle, beispielsweise über einen in dem Staubsaugergehäuse integrierten Generator. Als besonders vorteilhaft erweist es sich hierbei, daß zur elektrischen Leitung der Bürste an der Bürste Schleifkontakte ausgebildet sind. Zur Kontaktierung der Spannungsquelle mit den Bürsten ist weiter vorgesehen, daß die Schleifkontakte mit einem Kommutator zusammenwirken. Zur gezielten Anwendung der erzeugten elektrostatischen Aufladung wird vorgeschlagen, daß eine Borste oder eine Borstenreihe in einem solchen Drehwinkelbereich der Bürste geladen wird, der dem Kontakt der Bürste auf dem Teppich entspricht. Die Ladung eines Abschnittes der Borstenreihe erfolgt somit gerade in dem Augenblick, in welchem die Borsten in dem Teppich eingreifen. Die Ladung der Partikel erfolgt im wesentlichen durch direkten Kontakt mit den Borsten. Weiter können hierbei auch Ionisationseffekte auftreten, sofern die angelegte Spannung hoch genug ist, um eine Glimmentladung an der Borstenspitze hervorzurufen. Das Bodenblech ist geerdet, so daß eine Anziehungskraft zwischen dem geladenen Partikel und dem Bodenblech besteht. Die Aufnahme des Partikels aus dem Teppich wird hierdurch begünstigt. Sobald das Partikel mit dem Bodenblech in Berührung kommt wird es entladen. Derjenige Abschnitt der Borstenreihe, welcher sich in das

Innere des Staubsaugers bzw. der Staubsaugerdüse bewegt, wird ebenfalls beispielsweise am Bodenblech entladen. Demnach bestehen in diesem Moment keine Anziehungskräfte mehr zwischen Partikel und Borste bzw. Bodenblech, so daß die Partikel ungehindert mit dem Saugvolumenstrom abgefördert werden können. Die grundlegende Idee dieses Mechanismus entspricht der Ladung bzw. dem Transport des Partikels durch Induktion.

Die Erfindung betrifft weiter einen Staubsauger nach den Merkmalen des Oberbegriffs des Anspruches 1. Es ist bekannt, aktive und passive Ionisationseffekte zum Aufbringen oder zur Beseitigung elektrostatischer Ladungen von Oberflächen, z.B. bei der Folienherstellung und in der Verpackungsindustrie zu nutzen. Von besonderem Insteresse ist dabei die aktive Ionisation (Korona-Entladung) bei welcher eine unter Hochspannung stehende Spitze positive und/oder negative Ladungen (Ionen) generiert, die durch Wirkung eines elektrischen Feldes auf die zu be- bzw. entladende Oberfläche gebracht werden. Aufsetzend auf diese Verfahren wird zur Erzielung einer verbesserten Staubaufnahme erfindungsgemäß vorgeschlagen, daß der Saugmund und das Bodenblech aus einem isolierenden Kunststoff bestehen, daß in Strömungsrichtung vor dem Saugmund ein in die Luftführung ragendes Metallteil zur Korona-Entladung vorgesehen ist und daß in der Saugleitung eine Gegenelektrode angeordnet ist. Der gesamte Düsenbereich des Staubsaugers inklusive dessen Boden besteht aus isolierendem Kunststoff. Die Luft wird beispielsweise frontseitig eingesaugt, wobei im Bereich des eingesaugten Luftstromes ein in die Luftführung ragendes, geerdetes Metallteil mit einer ausgebildeten Ionisationsspitze angeordnet ist. Im Inneren der Saugleitung ist berührungssicher eine beispielsweise als Metalleiste oder Kollektorfläche aus leitendem Kunststoff ausgebildete Gegenelektrode angeordnet, an welcher eine elektrische Spannung angelegt ist. Bei genügend hoher Spannung kommt es im Bereich des luftansaugseitigen Metallteiles zur Korona-Entladung. Hieraus resultiert ein inhomogenes elektrisches Feld mit hoher Feldstärke im Bereich des Metallteiles, bzw. der hier gebildeten Ionisationsspitzen. Hierdurch setzt ein sogenannter Koronastrom zwischen den beiden Elektroden ein. Die durch die Korona-Entladung erzeugten positiven und negativen Ionen können sich sowohl an leitende als auch an nicht-leitende Partikel anlagern. Die freigesetzte Ionenwolke wird mit dem durch die Saugleitung ziehenden Luftstrom mitgerissen. Die Ionen lagern sich an Partikeln an, welche im elektrischen Feld zwischen Metallteil und Gegenelektrode eine zusätzliche Kraft ins Innere erfahren. Das im Ansaugbereich angeordnete Metallteil kann in Form von mehreren parallel zueinander ausgerichteten, nach innen gekrümmten Metallhäkchen ausgebildet sein, an deren Spitzen das erwähnte inhomogene elektrische Feld entsteht. Alternativ kann auch vorgesehen sein, daß das Metallteil eine Metallrolle ist. Letztere kann in vorteilhafter Weise eine übliche Laufrolle für den Staubsauger bzw. die Saugdüse sein, womit diese Metallrolle neben der ursprünglichen Bedeutung, ein leichteres Gleiten der Düse über den Teppich zu ermöglichen nunmehr auch für die Optimierung der Staubaufnahme eingesetzt wird. In weiterer Ausgestaltung ist vorgesehen, daß das Metallteil eine drehbare Scheibe ist. Durch unterschiedliche Gestaltung der Rollen- oder Scheibenoberfläche läßt sich die Ausbildung des elektrischen Feldes bzw. der Entladungsvorgang steuern. So wird vorgeschlagen, daß die Oberfläche des Metallteils poliert ist. Alternativ kann die Ausbildung auch so gewählt sein, daß die Oberfläche des Metallteiles rauh ist. Diese Rauhigkeit kann beispielsweise gebildet sein durch aufgebrachte bzw. ausgearbeitete spitzenartige Erhebungen. Weiter können bei Einsatz von Metallscheiben die Kanten in unterschiedlichen Formen ausgeführt sein, so beispielsweise mit Spitzen oder abgerundet. Weiter kann auch die Anzahl solcher Scheiben variieren. In einer bevorzugten Ausgestaltung ist vorgesehen, daß die Gegenelektrode mit einer Hochspannung mit 5 bis 15 kV oder höher beaufschlagt ist. Diese Hochspannung kann beispielsweise dadurch erzielt sein, daß ein in dem Staubsauger angeordneter Generator durch einen Treibriemen für die Bürste angetrieben ist. Durch diese Ausgestaltung ist das Funktionsprinzip des van-de-Graaff-Generators integriert in dem Staubsaugergehäuse ermöglicht. Der vorhandene Antriebsriemen wird somit als Bandgenerator genutzt.

Im allgemeinen gilt, daß Anbauteile oder Baugruppen, welche der elektrostatischen Aufladung dienen, gegenüber den angrenzenden Gruppen extrem gut gegen Ableitungen isoliert sein müssen. Die extrem gute Isolation kann schon durch geeignete Wahl des Werkstoffes (Kunststoff) erreicht werden. Der Oberflächenwiderstand von bspw. Polypropylen ist mit 10¹⁰ Ohm um vier Zehnerpotenzen kleiner als ABS. Zur Erzeugung der elektrostatischen Ladungen oder Felder können in einem System Teppichbürste/staubsauger unterschiedliche Mechanismen getrennt oder in Summe genutzt werden. Darüber hinaus sind auch weitere Varianten von Ionisationselektroden und unterschiedliche Anordnungen zur Gegenelektrode denkbar. So ist es beispielsweise denkbar auf eine Gegenelektrode zu verzichten. Darüber hinaus besteht auch die Möglichkeit die an den Elektroden erzeugte Ionenwolke mit Unterstützung eines Luftstromes in den Teppich zu blasen.

Alle beschriebenen Anwendungen sind prinzipiell auch mit umgekehrter Polarität zu betreiben. Als günstig für die Staubaufnahme erweist sich eine positive Hochspannung von 5 bis 15 kV gegen eine geerdete Elektrode. Darüber hinaus ist auch eine AC-Hochspannung vorstellbar. Zur Erhöhung der Staubaufnahme sind bekannte physikalische Prinzipien (Induktion, Ionisation) genutzt, welche bisher nicht zur Erhöhung der Staubaufnahme eingesetzt wurden. Zum Teil werden bereits umgesetzte Funktionsprinzipien zur effektiveren Staubaufnahme weiterentwickelt. Zu diesem zählt auch die Ergänzung der triboelektrischen Ladung (Reibung) durch aktive Ladung mit Spannungsquellen und das gezielte Aufbringen der Ladungen auf die Partikel im Teppich. Dazu können bereits vorhandene Elemente einer Saugdüse eines Staubsaugers (z.B. Rolle, Antriebsriemen usw.) eine erweiterte Bedeutung zukommen, indem diese zur Erzeugung bzw. zur Aufbringung elektrostatischer Ladungen genutzt werden. Der Vorteil der zuvor beschriebenen Erfindung liegt insbesondere in der Erhöhung der Staubaufnahme. Dies wird erreicht ohne zusätzliche mechanische Einwirkung in den Teppich und ohne den Volumenstrom oder den Unterdruck zu erhöhen, was eine gleichbleibende Gebläseleistung und Schiebekraft zur Folge hat.

Nachstehend ist die Erfindung anhand der beigefügten Zeichnung, welche lediglich mehrere Ausführungsbeispiele darstellt, näher erläutert. Es zeigt:
- Fig. 1: eine perspektivische Darstellung einer Saugdüse für einen Staubsauger in einer ersten Ausführungsform;
- Fig. 2: eine Unteransicht der Saugdüse;
- Fig. 3: eine perspektivische Einzeldarstellung einer Bürste der Saugdüse;
- Fig. 4: eine perspektivische Darstellung einer Bürste in einer zweiten Ausführungsform;
- Fig. 5: die Saugdüse in perspektivischer Darstellung, eine dritte Ausführungsform betreffend;
- Fig. 6: einen schematischen Querschnitt durch die Saugdüse, eine weitere Ausführungsform betreffend;
- Fig. 7: eine perspektivische Darstellung einer aus mehreren Scheiben zusammengesetzten Laufrolle für die Saugdüse gemäß einer weiteren Ausführungsform;
- Fig. 8: eine weitere Ausführungsform in einem Querschnitt durch die Saugdüse.

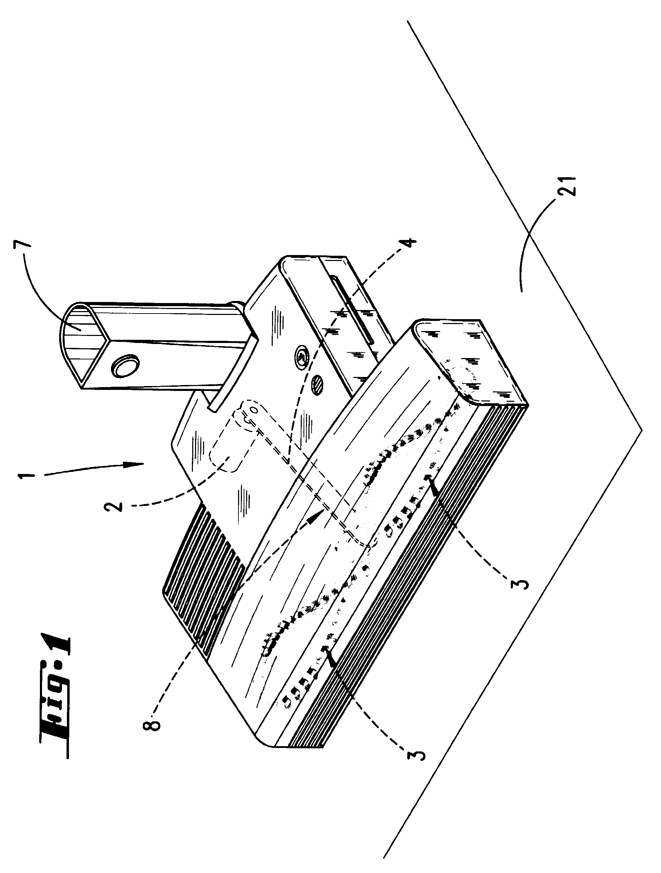

Dargestellt und beschrieben ist zunächst mit Bezug zur Fig. 1 eine Saugdüse 1 für einen nicht dargestellten Staubsauger mit einem integrierten Elektromotor 2 zum Antrieb von zwei zur Einwirkung auf den Bodenbelag 21 angeordneten Bürsten 3. Der Antrieb der Bürsten 3 erfolgt über einen Antriebsriemen 4.

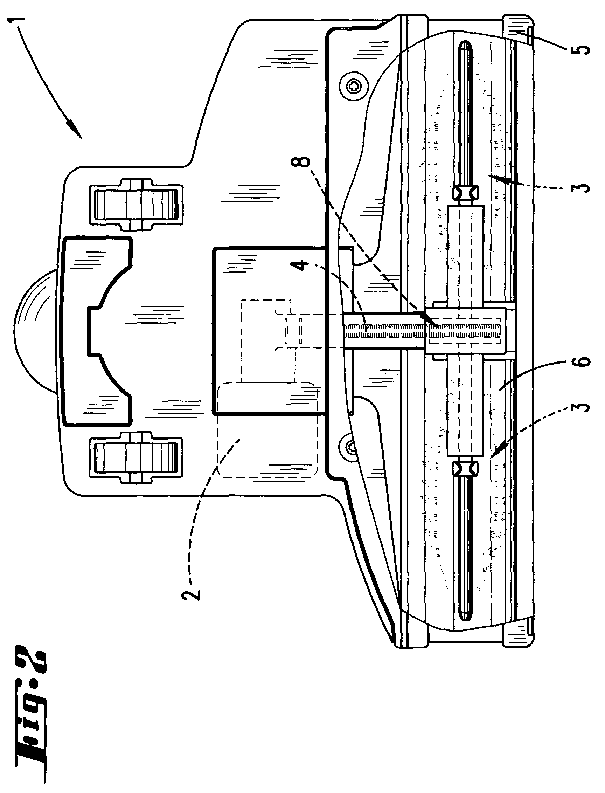

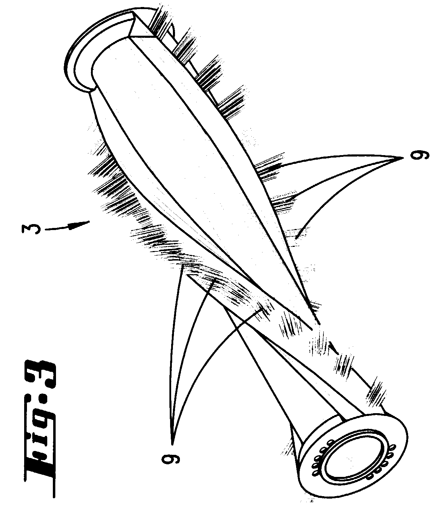

In der in den Fig. 1 bis 3 dargestellten erste Ausführungsform ist zunächst zur Erhöhung der Staubaufnahme ein elektrostatisch aufgeladenes Bodenblech 5 vorgesehen. Letzteres umgibt düsenunterseitig den Saugmund 6, in welchem eine, an den Staubsauger strömungsmäßig einschließbare Saugleitung 7 mündet.

Das in der Unteransicht in Fig. 2 näher dargestellte Bodenblech 5 kann aus einem Kunststoff bestehen, wobei durch Reibkontakt zu dem Bodenbelag, insbesondere Teppichboden, dieses elektrostatisch aufgeladen wird. Es wird jedoch bevorzugt, das Bodenblech 5 aktiv elektrostatisch aufzuladen, wozu in dem Staubsauger bzw. in der Saugdüse ein gesonderter Generator 8 vorgesehen ist. Dieser ist erfindungsgemäß gebildet durch den vorhandenen Antriebsriemen 4, welcher als Bandgenerator bzw. van-der-Graaff-Generator genutzt wird.

Darüber hinaus ist in diesem Ausführungsbeispiel auch eine statische Aufladung der Borsten 9 und der Bürsten 3 vorgesehen. Hierzu sind die Borsten hinsichtlich des Materials im Hinblick auf einen großen Abstand in der triboelektrischen Reihe ausgewählt, so beispielsweise aus Polypropylen zur Behandlung von Wollteppichen oder Polyamidteppichen. So wird der Reibkontakt zwischen den Bürsten bzw. den Borsten und den Teppichfasern als Ladungsquelle genutzt. Hierbei ist es auch denkbar, das Bodenblech 5 und auch das Material der Saugleitung 7 bzw. Saugmundes 6 im Hinblick auf die triboelektrische Reihe auszuwählen.

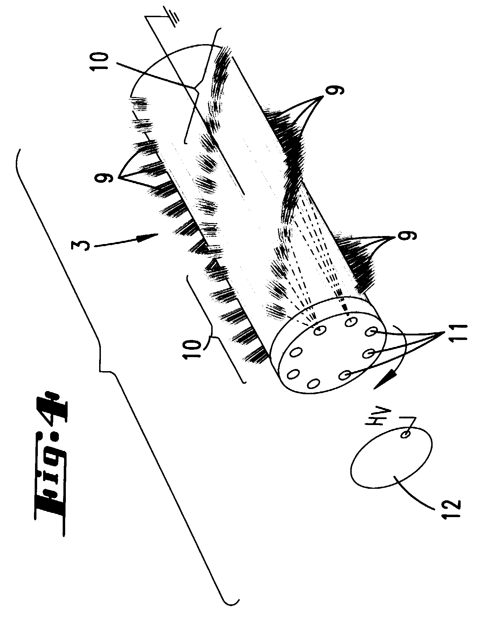

Eine weitere alternative Ausgestaltung zur Erzielung elektrostatischer Aufladungen zur Unterstützung der Staubaufnahme ist nachstehend anhand der Fig. 4 beschrieben. Hierzu wird die Bürste zur Behandlung des Teppichbodens aktiv elektrostatisch aufgeladen. Konkret ist dies so gelöst, daß die Bürste 3 wechselweise mit einem elektrischen Potential zur Aufprägung einer elektrischen Aufladung und Entladung beaufschlagt wird bzw. geerdet wird. Hierzu sind das Bodenblech 5 und die Borsten 8 der Bürste 3 aus einem elektrisch leitenden Material gefertigt. Zwei bis fünf Borstenbüschel sind erfindungsgemäß zu Borstenreihen 10 elektrisch zusammengefaßt, welche vereinzelten Borstenreihen 10 unabhängig voneinander be- oder entladen werden können. Die Ladung erfolgt über eine Spannungsquelle (Generator 8), welche auch hier durch den Antrieberiemen 4 in Form eines Bandgenerators gebildet sein kann. Diese Spannungsquelle wird mit Hilfe von an der Bürste 3 angeordneten Schleifkontakten 11 und eines Kommutators mit den Borsten 9 bzw. den Borstenreihen 10 kontaktiert. Die Ladung eines Abschnitts der Borstenreihe 10 erfolgt gerade in dem Augenblick in dem die Borsten 9 in den zu reinigenden Teppich eingreifen. Die Ladung der Partikel (Staubpartikel) erfolgt im wesentlichen durch direkten Kontakt mit den Borsten 9. Zusätzlich können auch Ionisationseffekte auftreten, sofern die angelegte Spannung hoch genug ist, um eine Glimmentladung an der Borstenspitze hervorzurufen.

Das Bodenblech 5 ist geerdet, womit eine Anziehungskraft zwischen den geladenen Partikeln und dem Bodenblech 5 besteht, was eine Aufnahme des Staubpartikels aus dem Teppich begünstigt. Sobald das Partikel mit dem Bodenblech 5 in Berührung kommt, wird es entladen. Derjenige Abschnitt der Borstenreihe 10, der sich in das Innere der Saugdüse 1 bewegt, wird ebenfalls am Bodenblech 5 entladen. Demnach bestehen hiernach keine Anziehungskräfte mehr zwischen Partikel und Borsten 9 bzw. Bodenblech 5, so daß die Partikel ungehindert mit dem Saugvolumenstrom ins Innere abgefördert werden können.

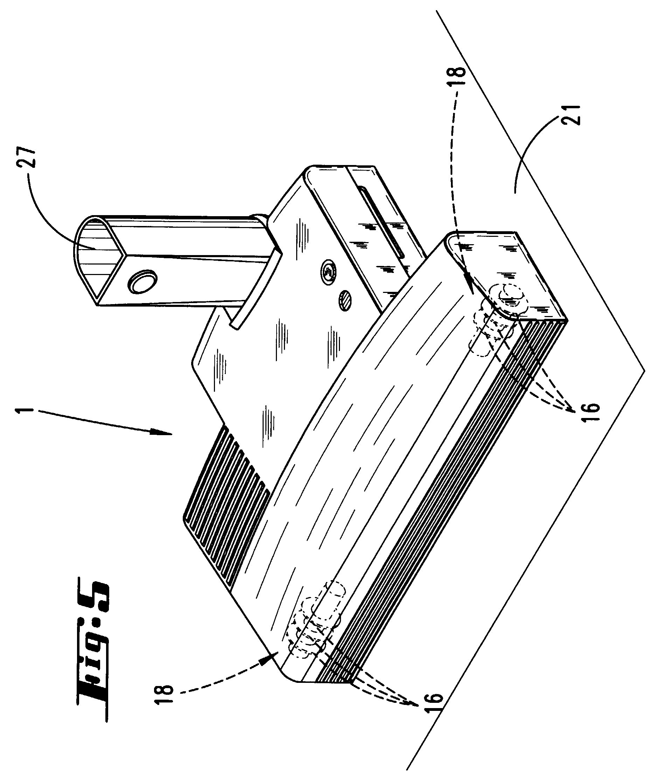

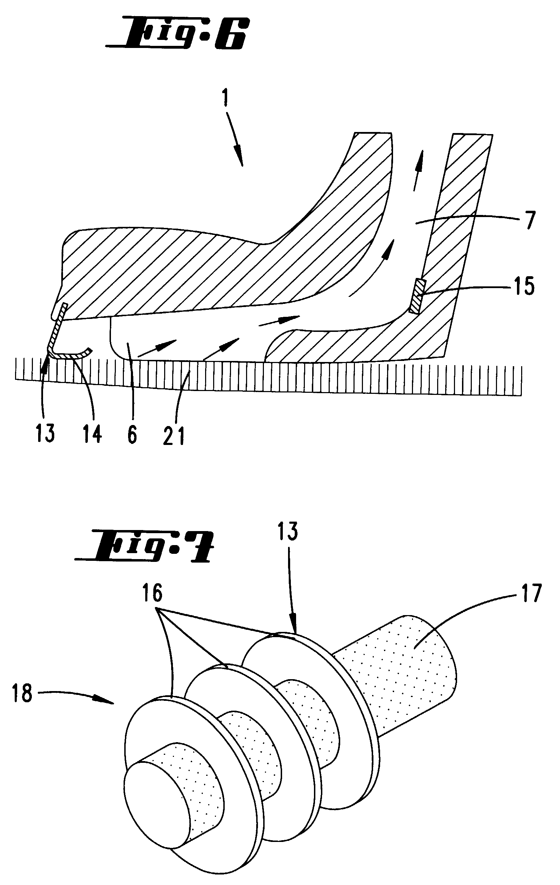

Eine weitere alternative Ausgestaltung ist in den Figuren 5 bis 8 dargestellt. Hier wird das Ionisationsprinzip umgesetzt. Die Saugdüse 1 besteht insgesamt aus einem isolierendem Kunststoff, so auch der Saugmund 6 und das Bodenblech 5. In Strömungsrichtung betrachtet ist vor dem Saugmund ein in die Luftführung ragendes Metallteil 13 zur Korona-Entladung vorgesehen. Dieses Metallteil 13 ist in dem in Fig. 6 dargestellten Ausführungsbeispiel durch nach innen gekrümmte Metallhäkchen 14 gebildet. Diese sind - quer zur Verschieberichtung der Saugdüse 1 betrachtet - über die gesamte Saugmundbreite gleichmäßig zueinander beabstandet angeordnet. Das Metallteil 13 bzw. die Metallhäkchen 14 sind in dem gezeigten Ausführungsbeispiel geerdet. Die Spitzen der Metallhäkchen 14 sind einer berührungssicher im Inneren der Saugleitung 7 angeordneten Gegenelektrode 15 in Form einer Metalleiste zugewandt. An letztere ist eine elektrische Spannung angelegt, bevorzugt eine positive Hochspannung von 5 bis 15 kV oder höher.

Bei genügend hoher Spannung kommt es an den Spitzen der Metallhäkchen 14 zur Korona-Entladung. Die dadurch freigesetzte Ionenladung wird mit dem Luftstrom mitgerissen. Die Ionen lagern sich an Partikeln an, welche dadurch im elektrischen Feld zwischen Spitzen und Gegenelektrode 15 eine zusätzliche Kraft ins Innere erfahren.

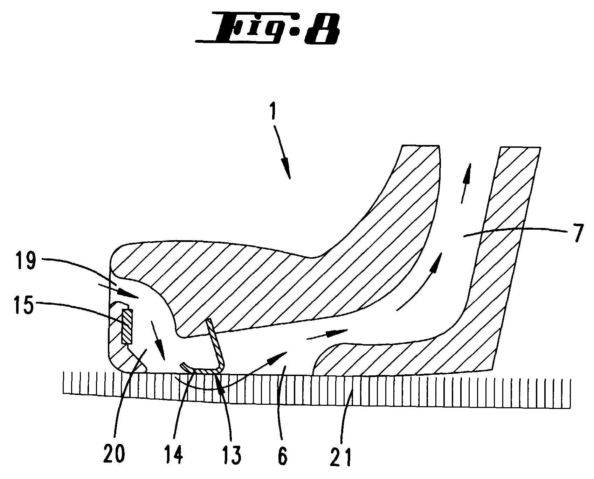

Alternativ zu den Metallhäkchen 14 können auch drehbare Scheiben 16 als Ionisationselektroden genutzt werden. Ein Beispiel hierzu ist in Fig. 7 dargestellt. Hier sind drei gleichmäßig zueinander beabstandete und im wesentlichen gleich ausgeformte Scheiben 16 vorgesehen, welche auf einer Welle 17 gehaltert sind. Welle 17 und Scheiben 16 bilden zusammen ein metallenes Laufrad 18 für die Saugdüse 1. In der perspektivischen Darstellung in Fig. 5 sind diese in ihrer Anordnung in einer Saugdüse 1 schematisch dargestellt.

Durch unterschiedliche Gestaltung der Rollen- bzw. Wellenoberfläche läßt sich die Ausbildung des elektrischen Feldes bzw. der Entladungsvorgang steuern. So kann, wie in Fig.7 schematisch dargestellt, die Oberfläche gerauht sein. Alternativ kann auch eine polierte Oberfläche Anwendung finden. Darüber hinaus kann zur Steuerung des elektrischen Feldes bzw. des Entladungsvorganges auch die Laufkante jeder Scheibe 16 in unterschiedlicher Form ausgeführt sein, so bspw. abgerundet oder mit Spitzen versehen sein. Weiter kann auch die Anzahl der Scheiben 16 variieren. Neben der ursprünglichen Bedeutung, ein leichteres Gleiten der Düse 1 über den Teppich zu ermöglichen, werden die Rollen 18 so auch für Optimierung der Staubaufnahme eingesetzt.

Ein weiteres Ausführungsbeispiel ist in der Schnittdarstellung gemäß Fig. 8 dargestellt. Auch hier ist zur Erzielung einer Ionenwolke ein in Form mehrerer Metallhäkchen 14 ausgebildetes, eine Ionisationselektrode darstellendes Metallteil 13 im bodennahen Ansaugbereich vorgesehen. Entgegen dem zuvorbeschrieben Ausführungsbeispiel gemäß Fig. 6 besitzt die Ansaugdüse 1 eine frontseitige Ansaugöffnung 19. Von dieser geht ein anderendig in dem Saugmund 6 mündender Ansaugkanal 20 aus.

In dem Ansaugkanal 20 ist berührungssicher die Gegenelektrode 15 angeordnet, welcher im Übergangsbereich von Ansaugkanal 20 in die Saugleitung 7 das Metallteil 13 mit dessen Spitzen gegenübersteht.

Die bei dieser Ausbildung erzeugte Ionenwolke wird erfindungsgemäß mit Unterstützung des Luftstromes im Ansaugkanal 20 in den Teppich geblasen, zur weiteren Erhöhung der Staubaufnahme durch elektrostatische Aufladung.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Staubsauger zur Reinigung von Böden oder Teppichen mit einem Saugmund (6) einem den Saugmund (6) umgebenden Bodenblech (5) und einer Saugleitung (7), wobei zur Unterstützung der Staubaufnahme eine elektrostatische Aufladung von Teilen des Staubsaugers vorgesehen ist, dadurch gekennzeichnet, daß das Bodenblech (5) elektrostatisch aufgeladen ist und daß die elektrostatische Aufladung mittels eines in dem Staubsauger angeordneten, gesonderten Generators (8) vorgenommen ist.

2. Staubsauger nach den Merkmalen des Oberbegriffs des Anspruches 1 oder insbesondere danach, wobei der Staubsauger weiter eine zur Einwirkung auf den Bodenbelag angeordnete, mit Borsten (9) versehene Bürste (3) aufweist, dadurch gekennzeichnet, daß die Borsten (9) hinsichtlich des Materials im Hinblick auf einen großen Abstand in der triboelektrischen Reihe ausgewählt sind.

3. Staubsauger nach einem oder mehreren der vorhergehenden Ansprüche oder insbesondere danach, dadurch gekennzeichnet, daß die Borsten (9) aus Polypropylen für Wollteppiche oder Polyamidteppiche bestehen.

4. Staubsauger nach einem oder mehreren der Ansprüche 2 bis 3 oder insbesondere danach, dadurch gekennzeichnet, daß das Bodenblech (5) und das Material in der Saugleitung (7) im Hinblick auf die triboelektrische Reihe ausgewählt sind.

5. Staubsauger nach den Merkmalen des Oberbegriffs des Anspruches 2 oder insbesondere danach, dadurch gekennzeichnet, daß die Bürste (3) wechselweise mit einem elektrischen Potential zur Aufprägung einer elektrischen Aufladung und Entladung beaufschlagt werden oder geerdet werden kann.

6. Staubsauger nach Anspruch 5 oder insbesondere danach, dadurch gekennzeichnet, daß das Bodenblech (5) und die Borsten (9) aus einem elektrisch leitenden Material besteht.

7. Staubsauger nach einem oder mehreren der Ansprüche 5 bis 6 oder insbesondere danach, dadurch gekennzeichnet, daß die Borsten (9) in Borstenreihen (10) angeordnet sind und daß die Borstenreihen (10) unabhängig voneinander mit einem elektrischen Potential beaufschlagt werden können oder geerdet werden können.

8. Staubsauger nach einem oder mehreren der Ansprüche 5 bis 7 oder insbesondere danach, dadurch gekennzeichnet, daß zur elektrischen Ladung der Bürste (3) an der Bürste Schleifkontakte (11) ausgebildet sind.

9. Staubsauger nach einem oder mehreren der Ansprüche 5 bis 8 oder insbesondere danach, dadurch gekennzeichnet, daß die Schleifkontakte (11) mit einem Kommutator (12) zusammenwirken.

10. Staubsauger nach einem oder mehreren der Ansprüche 5 bis 9 oder insbesondere danach, dadurch gekennzeichnet, daß eine Borste (9) oder eine Borstenreihe (10) in einem solchen Drehwinkelbereich der Bürste (3) geladen wird, der dem Kontakt der Bürste (3) auf dem Teppich entspricht.

11. Staubsauger nach den Merkmalen des Oberbegriffs des Anspruches 1 oder insbesondere danach, dadurch gekennzeichnet, daß der Saugmund (6) und das Bodenblech (5) aus einem isolierenden Kunststoff bestehen, das in Strömungsrichtung vor dem Saugmund (6) ein in die Luftführung ragendes Metallteil (13) zur Korona-Entladung vorgesehen ist und daß in der Saugleitung (7) eine Gegenelektrode (15) angeordnet ist.

12. Staubsauger nach Anspruch 11 oder insbesondere danach, dadurch gekennzeichnet, daß das Metallteil (13) eine Metallrolle ist.

13. Staubsauger nach einem oder mehreren der Ansprüche 11 bis 12 oder insbesondere danach, dadurch gekennzeichnet, daß das Metallteil (13) eine drehbare Scheibe (16) ist.

14. Staubsauger nach einem oder mehreren der Ansprüche 11 bis 13 oder insbesondere danach, dadurch gekennzeichnet, daß die Oberfläche des Metallteiles (13) poliert ist.

15. Staubsauger nach einem oder mehreren der Ansprüche 11 bis 14 oder insbesondere danach, dadurch gekennzeichnet, daß die Oberfläche des Metallteiles (13) rauh ist.

16. Staubsauger nach einem oder mehreren der Ansprüche 11 bis 15 oder insbesondere danach, dadurch gekennzeichnet, daß die Gegenelektrode (15) mit einer Hochspannung von 5 bis 15 kV oder auch höher beaufschlagt ist.

17. Staubsauger nach einem oder mehreren der vorhergehenden Ansprüche oder insbesondere danach, dadurch gekennzeichnet, daß ein in dem Staubsauger angeordneter Generator (8) durch einen Treibriemen (4) für die Bürste (3) angetrieben ist.
